# EUROPÄISCHE PATENTANMELDUNG

(11) **EP 1 424 223 A1**
(43) Veröffentlichungstag der Anmeldung: **02.06.2004**
(21) Anmeldenummer: 03450234.4
(22) Anmeldetag: 23.10.2003
(51) Int. Cl.: B60F 3/00, F41H 3/00, B63G 13/02, F01N 7/08, F01N 3/05

(54) **Einrichtung zur Verringerung der Infrarot-Emission bei amphibischen Fahrzeugen, insbesondere Panzerfahrzeugen**

(30) Priorität: 27.11.2002 AT 79902 U
(71) Anmelder: Steyr-Daimler-Puch Spezialfahrzeug AG & Co. KG, 1111 Wien (AT)
(72) Erfinder: Strassgürtl, Anton, Ing., 2432 Schwadorf (AT); Koleszar, Béla, Dipl.- Ing., 2320 Schwechat (AT)
(74) Vertreter: Rippel, Andreas

(57) **Zusammenfassung**

Eine Einrichtung zur Verringerung der Infrarot-Emission bei amphibischen Fahrzeugen (1), insbesondere Panzerfahrzeugen zeichnet sich dadurch aus, daß bei einem amphibischen Einsatz der Auspuffstrom gegen die Wasseroberfläche gerichtet ist, wobei das Ausströmende (8) des Auspuffs knapp oberhalb der Wasseroberfläche angeordnet ist.

## Beschreibung

Die Erfindung bezieht sich auf eine Einrichtung zur Verringerung der Infrarot-Emission bei amphibischen Fahrzeugen, insbesondere Panzerfahrzeugen.

Neben der Mobilität, dem Panzerschutz und der Feuerkraft bei militärischen Fahrzeugen, insbesonders Panzerfahrzeugen, ist die Tarnung ein wesentliches Kriterium für die erfolgreiche Erfüllung taktischer Missionen.

Daher werden viele Einsätze, besonders aber das Überqueren von Wasserhindernissen, bevorzugt bei schlechten Sichtverhältnissen, ob in der Nacht, Nebel, bei Dämmerung oder unter Verwendung von Nebelgranaten, durchgeführt. Dies gewährt aber nur begrenzten Schutz, da selbst einfache Infrarot-Beobachtungsgeräte "Hot-Spots" sichtbar machen und dadurch Fahrzeuge leicht erkannt werden können. Besonders nachteilig wirken sich dabei die heißen ausströmenden Auspuffgase und die Kühlluft aus. Verstärkt wird dieser Effekt, wenn der Unterschied zur Umgebungstemperatur sehr groß ist, wie dies während des Schwimmens vorhanden ist, da die Gewässer meist eine niedrigere Temperatur haben als die Luft. Zusätzlich befinden sich die amphibischen Fahrzeuge hier in einem Zustand mit verringerter Beweglichkeit bzw. Wirkmöglichkeit, sodaß die Verletzbarkeit durch Feindeinwirkung erheblich ansteigt. Übliche Maßnahmen, wie die Verwendung von Thermoschutzschildern, welche vor den heißen Stellen angebracht werden, oder eine Mischung der extrem heißen Auspuffgase mit der weniger heißen Kühlluft, bewirken aber nur ein bedingtes Angleichen an die Umgebungstemperatur und ergeben dadurch keine ausreichende Infrarot-Tarnung der Fahrzeuge.

Die Erfindung hat es sich zum Ziel gesetzt, eine Einrichtung der eingangs genannten Art zu schaffen, bei der die "Hot-Spots" an der Fahrzeugoberfläche beinahe komplett verschwinden, sodaß bei einer Betrachtung mit Infrarotgeräten das Fahrzeug praktisch nicht erkennbar ist. Erreicht wird dies dadurch, daß bei einem amphibischen Einsatz der Auspuffstrom gegen die Wasseroberfläche gerichtet ist, wobei das Ausströmende des Auspuffs knapp oberhalb der Wasseroberfläche angeordnet ist.

Bei einer erfindungsgemäßen Einrichtung werden die ausströmenden Auspuffgase einen fein zerstäubten Spritzwassernebel im unmittelbaren Auspuffaustrittsbereich erzeugen. Dies wird durch die knapp über der Wasseroberfläche austretenden Auspuffgase aufgrund ihrer hohen Geschwindigkeit und des gegen die Wasseroberfläche gerichteten Auspuffstromes erreicht. Durch diesen Spritzwassernebel werden sowohl die Auspuffgase und deren Schutz- und Leiteinrichtungen als auch große Teile des Fahrzeuges, insbesondere der Panzerwanne, auf eine Temperatur nahe der umgebenden Gewässertemperatur abgekühlt. Überdies erzeugt dieser Wassernebel eine für Wärmebildgeräte kaum durchblickbare kalte Wassernebelwand, die zusätzlich zur Tarnung des Fahrzeuges dient.

Besonders wirkungsvoll erweist sich die erfindungsgemäße Einrichtung, wenn der Winkel des Auspuffstromes gegenüber der Vertikalen gleich oder kleiner 60° ist.

Eine Verstärkung des Vernebelungseffektes wird erfindungsgemäß dadurch bewirkt, daß der Auspuff mit einem Ejektor versehen ist, der Luft ansaugt. Durch den Einsatz dieses Ejektors, der zusätzliche Umgebungsluft im Schwimmbetrieb beziehungsweise über Lamellen geführte Kühlluft im Landbetrieb ansaugt, wird die Austrittsgeschwindigkeit und damit die Energie der Gase am Austritt vergrößert. Zusätzlich kühlt dieser Ejektor die Auspuffgase durch die Verdünnung mit der Luft und reduziert damit die Aufheizung des Wassernebels.

Zweckmäßig ist das Endrohr des Ejektors düsenförmig ausgebildet.

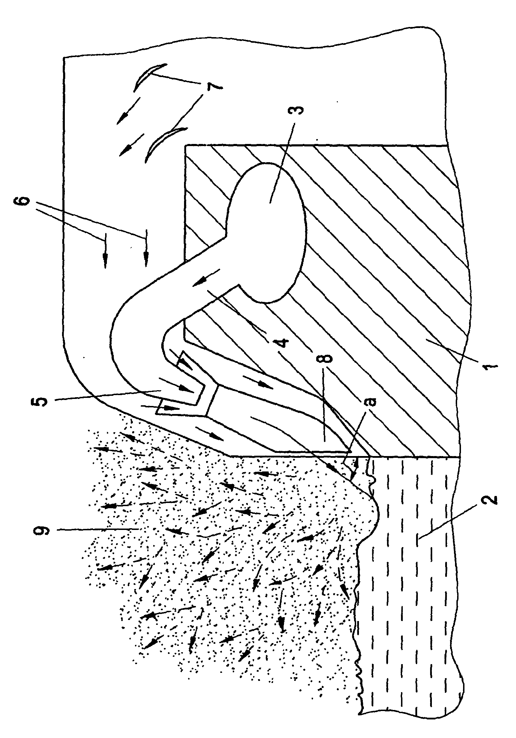

Nachstehend ist die Erfindung anhand eines in der Zeichnung dargestellten Ausführungsbeispieles näher beschrieben, ohne auf dieses Beispiel beschränkt zu sein. Dabei zeigt die einzige Figur schematisch die erfindungsgemäße Einrichtung bei Einsatz eines Fahrzeuges im Schwimmbetrieb.

Gemäß der Zeichnung befindet sich ein Amphibienfahrzeug 1 im amphibischen Einsatz in einem Gewässer 2. Das Fahrzeug 1 ist mit einem Schalldämpfer 3 für die Auspuffgase versehen, an den sich ein Auspuffrohr 4 anschließt. Dieses Auspuffrohr 4 endet in einem Ejektor 5, dessen Endrohr düsenförmig ausgebildet ist.

Der Ejektor 5 saugt Luft 6 an und mischt diese mit den Abgasen aus dem Schalldämpfer 3. Die Luft wird über Lamellen 7 zugeführt.

Das Endstück 8 des Auspuffsystems ist knapp oberhalb der Oberfläche des Gewässers 2 angeordnet. Der aus dem Endstück 8 austretende Auspuffstrom ist gegen die Oberfläche des Gewässers 2 gerichtet, derart, daß ein Spritzwassernebel 9 erzeugt wird. Wie bereits ausgeführt wurde, werden durch diesen Spritzwassernebel 9 insbesondere die heißen Auspuffgase auf eine Temperatur der umgebenden Gewässertemperatur abgekühlt.

Der Winkel a des Auspuffstromes gegenüber der Vertikalen ist vorzugsweise kleiner oder gleich 60°.

## Patentansprüche

1. Einrichtung zur Verringerung der Infrarot-Emission bei amphibischen Fahrzeugen (1), insbesondere Panzerfahrzeugen, **dadurch gekennzeichnet, daß** bei einem amphibischen Einsatz der Auspuffstrom gegen die Wasseroberfläche gerichtet ist, wobei das Ausströmende (8) des Auspuffs knapp oberhalb der Wasseroberfläche angeordnet ist.

2. Einrichtung nach Anspruch 1, **dadurch gekennzeichnet, daß** der Winkel (a) des Auspuffstromes gegenüber der Vertikalen kleiner oder gleich 60° beträgt.

3. Einrichtung nach Anspruch 1 oder 2, **dadurch gekennzeichnet, daß** der Auspuff mit einem Ejektor (5) versehen ist, der Luft (6) ansaugt.

4. Einrichtung nach Anspruch 3, **dadurch gekennzeichnet, daß** das Endrohr des Ejektors (5) düsenförmig ausgebildet ist.
